# FASCICULE DE BREVET EUROPEEN

(11) **EP 0 928 740 B1**
(45) Date de publication et mention de la délivrance du brevet: **01.09.2004**
(21) Numéro de dépôt: 98403330.8
(22) Date de dépôt: 30.12.1998
(51) Int. Cl.: B64C 25/42, B60T 17/18, B60T 13/66, B60T 13/68, B60T 11/24

(54) **Dispositif de freinage d'un train de roues d'aéronef**
Bremsvorrichtung für einen Satz Flugzeugräder
Brake device for a set of aircraft wheels

(30) Priorité: 12.01.1998 FR 9800197
(43) Date de publication de la demande: 14.07.1999
(73) Titulaire: Messier-Bugatti, 78140 Velizy Villacoublay (FR)
(72) Inventeur: Ybert, Franck, 92290 Chatenay-Malabry (FR)
(74) Mandataire: Jaunez, Xavier

(56) Documents cités:
- EP-A- 0 275 786
- DE-A- 3 939 091
- DE-A- 4 445 975
- DE-C- 19 523 108
- FR-A- 2 038 576

## Description

La présente invention concerne le freinage contrôlé d'un train de roues d'aéronef, et plus particulièrement un dispositif de freinage d'un train de roues dont les roues sont en général réparties en deux groupes agencés symétriquement de part et d'autre d'un plan longitudinal médian de l'aéronef, du type dans lequel chaque roue est équipée d'un frein actionné à partir de pédales de frein.

Il existe déjà de nombreux dispositifs de freinage qui sont équipés d'un premier circuit hydraulique alimenté par une source hydraulique associée et utilisé pour le freinage lorsque les conditions sont normales, et d'un circuit hydraulique de secours alimenté par une autre source de pression hydraulique, intervenant seulement en cas de panne.

Traditionnellement, les deux circuits hydrauliques (normal et secours) mènent à chacun des différents freins via une valve de freinage qui est une servovalve commandée électriquement par une unité de pilotage qui mesure des informations correspondant à l'enfoncement des pédales de freins et en général aussi à la vitesse de la roue concernée. Pour l'état de la technique, on pourra se référer aux documents EP-A-0 443 213, US-A-4,834,465, US-A-5,050,940, US-A-5,024,491, US-A-3,926,479, FR-A-2.038.801, et DE-B-1.118.020. Un autre exemple de dispositif de freinage électro-hydraulique d'un train de roues d'aéronef particulièrement élaboré est décrit dans le document US-A-5,397,173 de la demanderesse.

Les différents dispositifs de freinage décrits dans les documents précités comportent ainsi des servovalves à commande électrique, dont la structure comporte systématiquement deux étages hydrauliques reliés entre eux par une liaison hydraulique et respectivement associés à la commande et à la distribution, l'étage de commande agissant sur le tiroir de l'étage de distribution. L'étage hydraulique de commande est commandé électriquement, et la pression d'alimentation en entrée de la servovalve est modulée au niveau de l'étage de distribution par des sections de passage (gicleurs) fonctionnant sur un principe de fuite hydraulique en général de l'ordre d'un litre par minute. Ces fuites hydrauliques sont toujours nécessaires dans une telle conception, et leur importance rend difficile l'utilisation de telles servovalves lorsque la source hydraulique est constituée par un accumulateur hydraulique, ce qui peut être le cas pour le circuit secours. En effet, le volume de fluide consommé par la fuite permanente de ces servovalves n'est plus disponible pour alimenter les freins, ce qui limite considérablement la durée et le nombre d'applications de freinage avant que l'accumulateur ne soit vide.

Bien que la structure des servovalves de freinage actuellement utilisées soit globalement maîtrisée, les spécialistes connaissent bien les inconvénients et les contraintes de l'utilisation de tels types de valves de freinage.

La pression d'utilisation récupérée en sortie de la servovalve et qui est fonction de l'intensité du courant de consigne est en effet obtenue avec une précision médiocre. Tout d'abord, le réglage mécanique de la servovalve au niveau des gicleurs ne permet pas d'obtenir une dispersion sur la pression d'utilisation inférieure à quelques bars, voire de l'ordre d'une dizaine de bars en certains points, compte tenu des phénomènes de non linéarité et d'hystérésis propres à tout appareil hydraulique. De plus, la servovalve est sensible aux fluctuations de la pression d'alimentation et de la température du fluide hydraulique, ce qui peut induire des variations de pression d'utilisation de plusieurs bars, même en utilisation normale. Enfin, l'usure mécanique des gicleurs induit une dérive inévitable dans le temps.

L'invention vise précisément à résoudre ce problème, et à concevoir un dispositif de freinage plus performant, en étant moins sensible aux phénomènes de température et d'usure, et aux fluctuations d'alimentation, tout en restant très précis pour la pression d'utilisation sans qu'il soit nécessaire d'effectuer des ajustements périodiques contraignants.

L'invention a ainsi pour objet de réaliser un dispositif de freinage d'un train de roues d'aéronef dont la structure permet d'obtenir un freinage précis et constant dans le temps, sans les inconvénients précités inhérents à l'utilisation de servovalves de freinage à deux étages hydrauliques.

Ce problème est résolu conformément à l'invention grâce à un dispositif de freinage d'un train de roues d'aéronef, dont chaque roue est équipée d'un frein actionné à partir de pédales de freinage, ledit dispositif de freinage comportant deux sources de pression alimentant chacune un circuit hydraulique, dont un circuit normal et un circuit secours intervenant en cas de panne, ces deux circuits hydrauliques menant à chacun des différents freins via une valve de freinage associée, les valves de freinage du circuit normal et/ou du circuit secours étant constituées par des valves à entraînement direct commandées électriquement par une unité électronique de commande associée.

Les valves à entraînement direct, ou "direct drive valve" (DDV) pour les anglo-saxons sont, de façon surprenante pour l'homme de métier, très performantes dans le cadre d'une utilisation intégrée à des systèmes de freinage d'aéronef. De telles valves à entraînement direct ont jusque là été seulement utilisées dans des machines-outils pour des contrôles de position ou de déplacement (par exemple dans des laminoirs), ou dans des suspensions de véhicules automobiles. Dans les utilisations connues de telles valves à entraînement direct, il était en général prévu un asservissement en débit (et non en pression), selon lequel la position du distributeur de la valve est contrôlée par un capteur de position.

Conformément à un premier mode d'exécution du dispositif de freinage de l'invention, les valves de freinage du circuit secours sont seules constituées par des valves à entraînement direct, les valves de freinage du circuit normal étant quant à elles des servovalves de type traditionnel. On obtient déjà un avantage considérable résultant de la difficulté à utiliser les servovalves classiques à double étage hydraulique dans le circuit secours, dans le cas où la source hydraulique de ce circuit est constituée par un accumulateur hydraulique. On pourra alors prévoir que les valves de freinage à entraînement direct sont chacune associées aux freins d'une paire de roues.

Conformément à une variante d'exécution, les valves de freinage du circuit normal et du circuit secours sont toutes constituées par des valves à entraînement direct. On dispose alors des nombreux avantages qui seront détaillés plus loin, inhérents à l'utilisation de valves à entraînement direct pour l'ensemble du circuit de freinage, donc à la fois pour une utilisation normale et une utilisation en cas de panne.

Conformément à une caractéristique avantageuse, certaines au moins des valves à entraînement direct sont asservies en pression.

Un tel asservissement en pression est extrêmement intéressant, dans le cadre de l'utilisation de valves de freinage à entraînement direct dans un circuit de freinage, contrairement à l'asservissement en position parfois utilisé pour de telles valves dans des environnements technologiques complètement différents.

De préférence alors, chaque valve à entraînement direct asservie en pression inclut un distributeur hydraulique et un moteur électrique d'actionnement commandé par une électronique de commande associée, et, sur la sortie d'utilisation du distributeur hydraulique, un capteur de pression qui envoie à ladite électronique de commande un signal électrique représentatif de la pression mesurée. Si cela est souhaitable, la valve à entraînement direct asservie en pression pourra être également asservie en position grâce à un capteur de position associé au moteur électrique d'actionnement, qui envoie un signal électrique correspondant à l'électronique de commande associée.

La valve à entraînement direct, ne comportant pas le premier étage hydraulique des servovalves traditionnelles (par exemple un potentiomètre hydraulique quadruple), la puissance pour commander le distributeur de la valve est maintenant électrique (il ne s'agit en effet que de la commande du moteur d'actionnement du distributeur) et non plus hydraulique (par la fuite du premier étage hydraulique de la servovalve). De plus, contrairement à ce que l'on rencontrait avec les servovalves traditionnelles asservies ou non en pression, la fuite de la valve à entraînement direct (alimentation vers retour) est maintenant circonscrite au distributeur de cette valve, et donc par construction inférieure à la fuite d'une servovalve traditionnelle. Ceci ouvre la voie à un véritable freinage électrique, en particulier sur le circuit secours où l'alimentation est limitée en volume, par exemple par l'utilisation d'un accumulateur hydraulique, ce qui était jusque-là trop contraignant avec les servovalves traditionnelles du fait de la nécessité d'accroître de façon considérable le volume hydraulique disponible en alimentation, en particulier en augmentant la capacité de l'accumulateur hydraulique.

Conformément à une autre caractéristique intéressante, un circuit de freinage parc est combiné au circuit secours avec une alimentation commune, ledit circuit de freinage parc menant à chacun des freins de roues par un clapet navette associé disposé en aval de la valve à entraînement direct correspondante.

D'autres caractéristiques et avantages de l'invention apparaîtront plus clairement à la lumière de la description qui va suivre et des dessins annexés, concernant des modes de réalisation particuliers de l'invention, en référence aux figures où :
- la figure 1 est un schéma d'un premier mode d'exécution du dispositif de freinage selon l'invention, dans lequel les valves à entraînement direct ne concernent que le circuit secours ;
- la figure 2 illustre un schéma analogue à celui de la figure 1, faisant apparaître l'unité de commande du circuit normal ;
- la figure 3 illustre une variante de la figure 2, dans laquelle les valves de freinage du circuit normal sont également des valves à entraînement direct ;
- la figure 4 est une vue schématique isolée illustrant l'intégration d'une valve à entraînement direct dans un circuit de freinage de type électrique ;
- la figure 5 est également une vue schématique partielle illustrant une valve à entraînement direct avec son moteur électrique et son distributeur hydraulique, ainsi que ses organes de commande et d'asservissement.

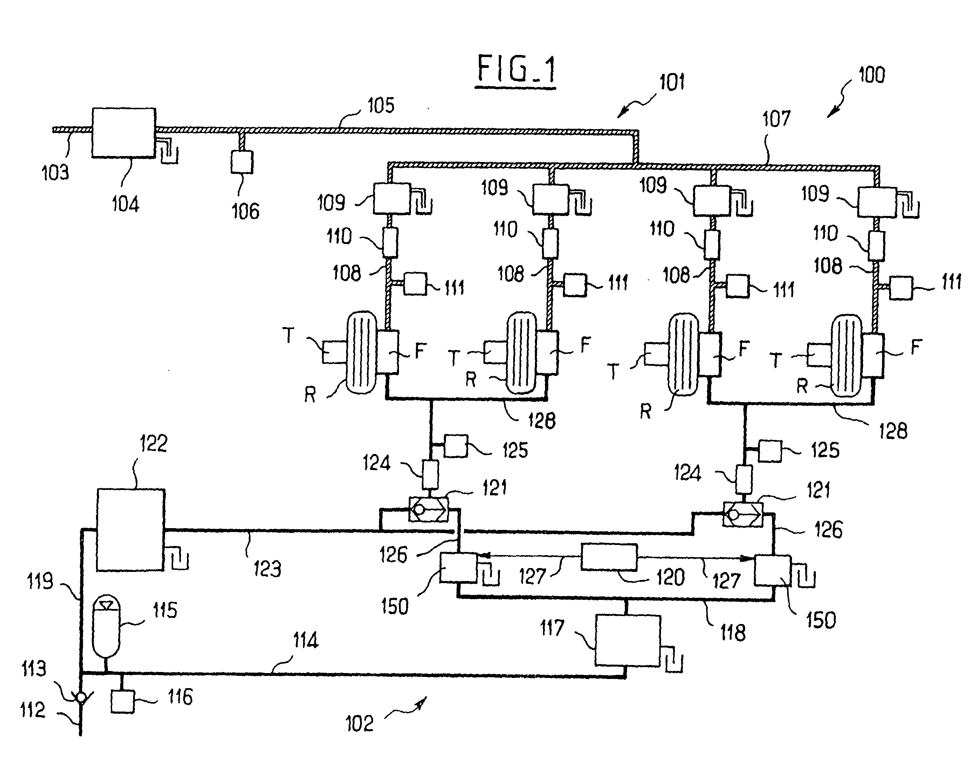

La figure 1 illustre un dispositif de freinage d'un train de roues d'aéronef, et l'on a illustré, à titre d'exemple, un ensemble de deux paires de roues R, dont une paire est à gauche et l'autre à droite de l'aéronef. Les freins notés F de chaque roue sont actionnés à partir de pédales de freinage non représentées ici. On notera que chaque roue est ici équipée d'un tachymètre T adressant chacun une information aux organes électroniques de commande en rapport avec la vitesse de la roue concernée.

Le dispositif de freinage noté 100 comporte deux sources de pression alimentant chacune un circuit hydraulique. On distingue ainsi un circuit hydraulique dit normal 101, et un circuit hydraulique dit secours 102, qui intervient en cas de panne.

En l'espèce, le circuit normal 101 est agencé conformément à une technique traditionnelle, notamment en comportant des servovalves de freinage notées 109 associées chacune à un frein de roue. On rappellera donc seulement brièvement les différents composants de ce circuit hydraulique 101.

L'entrée du circuit notée 103 mène à une électrovanne 104, en aval de laquelle on trouve une branche 105 équipée d'un capteur de pression 106. La branche 105 mène à une branche commune 107 alimentant en parallèle des branches 108 en nombre égal à celui du nombre de roues concernées (ici quatre). Chaque branche 108 comporte successivement une servovalve à double étage hydraulique de type traditionnel 109, en aval de laquelle on trouve un fusible hydraulique 110, et un piquage pour un capteur de pression 111.

Le circuit secours 102 comporte quant à lui une source hydraulique qui est ici constituée par un accumulateur hydraulique. Ce circuit secours 102 comprend plus précisément une entrée 112 menant à un clapet anti-retour 113, en aval duquel on trouve une première branche 114 équipée d'un accumulateur 115 et d'un capteur de pression 116, et menant à une électrovanne 117 qui est analogue à l'électrovanne 104 précitée. L'autre branche 119 mène quant à elle à une électrovanne de parc 122, en aval de laquelle on trouve une branche 123 menant à l'entrée de deux clapets navettes 121, en aval desquels on trouve un fusible hydraulique 124 et un capteur de pression 125, avant d'arriver par une branche 128 au frein F de chacune des roues.

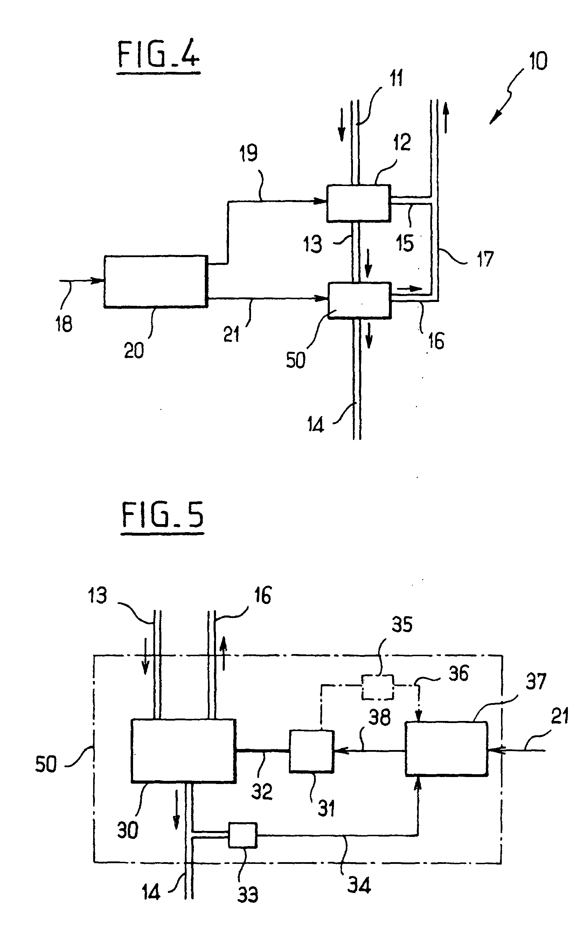

En sortie de l'électrovanne 117, on trouve une branche 118 menant à deux valves 150 qui, conformément à une caractéristique de l'invention, sont des valves à entraînement direct (ou "direct drive valve", ou DDV). Chacune de ces valves 150 à entraînement direct est commandée électriquement par une unité électronique de commande associée notée 120 (ici commune aux deux valves), au moyen de liaisons notées 127. Ainsi qu'on l'exposera plus loin plus en détail en référence à la figure 5, chaque valve à entraînement direct 150 est de préférence équipée d'une électronique de commande, interne à ladite valve, qui assure l'asservissement en pression de la valve à entraînement direct et reçoit les ordres de pression de l'unité électronique de commande associée 120. La sortie d'utilisation hydraulique de chacune de ces valves 150 est notée 126, et mène à l'autre entrée des clapets navettes précités 121.

Ainsi, dans le cas du mode de réalisation illustré sur la figure 1, les valves de freinage du circuit secours 102 sont constituées par des valves à entraînement direct (ici deux valves 150), tandis que les valves de freinage du circuit normal 101 sont des servovalves 109 de type traditionnel.

Outre la simplification du circuit secours 102 qui découle de l'utilisation de valves à entraînement direct à la place des servovalves traditionnelles, on obtient de nombreux avantages pratiques inhérents à la structure de ce type particulier de valves, et qui seront mieux compris à la lumière de la description générale qui va suivre des figures schématiques 4 et 5.

La figure 4 montre une partie de circuit hydraulique de freinage notée 10, avec une canalisation d'alimentation 11 arrivant sur une électrovanne 12. La sortie d'utilisation de l'électrovanne, notée 13, mène à une valve à entraînement direct 50, la sortie retour de cette même électrovanne 12 étant notée 15. La sortie d'utilisation de la vanne 50 à entraînement direct est noté 14 et mène vers le ou les freins concernés, tandis que la sortie retour notée 16 de ladite vanne rejoint une canalisation 17 commune à la sortie 15 de retour de l'électrovanne 12. Une unité électronique de commande 20 reçoit des ordres électriques de freinage commandés par le pilote, comme symbolisé par la flèche 18. Cette unité électronique de commande 20 peut ainsi envoyer un ordre d'ouverture à l'électrovanne amont 12, comme symbolisé par la ligne 19, ainsi qu'un ordre de pression à la valve à entraînement direct 50 (ou plus exactement à l'électronique de commande interne à cette valve), comme symbolisé par la ligne 21.

La figure 5 permet de mieux comprendre l'agencement de la valve à entraînement direct 50 précitée. La valve 50 est ici schématisée par un rectangle en traits mixtes, et comporte essentiellement un distributeur hydraulique 30 et un moteur électrique d'actionnement 31 qui est relié à ce distributeur par une liaison mécanique 32. La liaison mécanique 32 est représentée ici de façon schématique, mais l'on comprendra aisément que ce type de liaison englobe tout type de dispositif mécanique classique capable de transformer un mouvement de rotation en un mouvement linéaire, un mouvement de rotation en un autre mouvement de rotation, ou un mouvement linéaire en un autre mouvement linéaire, en agissant ainsi selon le cas sur le tiroir coulissant ou le boisseau tournant du distributeur hydraulique 30. Le distributeur 30 est relié à l'alimentation hydraulique haute pression 13, à la sortie d'utilisation 14, et à la sortie retour basse pression 16 toutes représentées en figure 4. Le distributeur 30 est l'unique étage hydraulique de la valve à entraînement direct 50, contrairement aux servovalves traditionnelles qui comportent deux étages hydrauliques. La valve à entraînement direct 50 comporte également une électronique de commande notée 37, interne à ladite valve, qui reçoit les ordres de pression délivrés par l'unité de commande 20 via la ligne 21 représentée sur la figure 4. Le moteur hydraulique d'actionnement 31 est ainsi commandé par l'électronique de commande électronique associée 37, comme schématisé par la flèche 38.

Bien que cela ne soit pas obligatoire, il est en outre intéressant de prévoir que la valve à entraînement direct 50 soit asservie en pression, l'asservissement en pression étant assuré par l'électronique de commande interne associée.

En l'espèce, la valve à entraînement direct 50 comporte ainsi en plus un capteur de pression 33 piqué sur la canalisation d'utilisation 14 du distributeur 30, lequel capteur envoie un signal électrique représentatif de la pression mesurée à l'électronique de commande 37, comme schématisé par la ligne 34. Ainsi, l'ordre électrique envoyé par l'électronique de commande 37 au moteur électrique d'actionnement 31 tient compte à tout moment de la pression d'utilisation mesurée par le capteur de pression 33. Ce capteur de pression 33, qui consomme peu d'énergie, peut procurer une précision très élevée, de l'ordre du bar sur toute la plage d'utilisation (on sait que les servovalves traditionnelles présentent une erreur pouvant atteindre une dizaine de bars environ en certains points de la plage d'utilisation). Le capteur de pression 33 pourra en outre comporter un organe intégré de correction de température de façon à supprimer toute influence néfaste ou sensibilité à la température (on se rappelle que les servovalves traditionnelles sont extrêmement sensibles à la température, cette influence étant de l'ordre de quelques bars par dizaine de degrés Celsius). La valve à entraînement direct 50 est en outre beaucoup moins sensible aux fluctuations d'alimentation que ne le sont les servovalves traditionnelles à deux étages hydrauliques, grâce à l'asservissement en pression réalisé par le biais du capteur de pression 33. Dans le cas où le capteur de pression 33 est prévu, ce capteur est en aval du distributeur, ce qui est en faveur de l'insensibilité aux variations de pression.

L'homme de l'art comprendra que l'asservissement en pression de la valve à entraînement direct n'est pas indispensable pour une telle valve, celle-ci pouvant en effet fonctionner avec un capteur de position en mode d'asservissement en débit, mais ceci imposerait alors de rajouter une boucle d'asservissement en pression à l'extérieur de la valve à entraînement direct, car le contrôle du freinage impose un contrôle de la pression dans les freins. C'est pourquoi il sera en général préféré un asservissement interne en pression comme cela vient d'être décrit.

Ainsi, avec la valve à entraînement direct 50, on ne trouve plus les phénomènes d'usure qui étaient inhérents à la présence de gicleurs dans les servovalves traditionnelles, de sorte qu'il n'y a plus de problèmes de dérive dans le temps. De plus, on pourra en général, grâce à ce type de valve à entraînement direct, se passer des ajustements périodiques qui étaient obligatoires avec les servovalves traditionnelles, une simple vérification périodique par le calculateur étant maintenant suffisante.

On a vu sur la figure 1 qu'il était très intéressant d'utiliser des valves à entraînement direct 150 pour le circuit secours 102. Ceci est particulièrement important si l'on se rappelle qu'avec les servovalves traditionnelles on était lié au principe d'une fuite hydraulique permanente et nécessaire, ce qui n'est plus le cas avec des valves à entraînement direct. Il y a bien entendu quelques fuites au niveau du tiroir ou du boisseau de chaque valve à entraînement direct, mais ces fuites sont comparativement très faibles par rapport aux fuites de 0,5 à 1 litre par minute couramment rencontrées avec les servovalves traditionnelles, les fuites au niveau du tiroir ou du boisseau représentant maintenant environ un dixième des fuites retour rencontrées avec une servovalve classique.

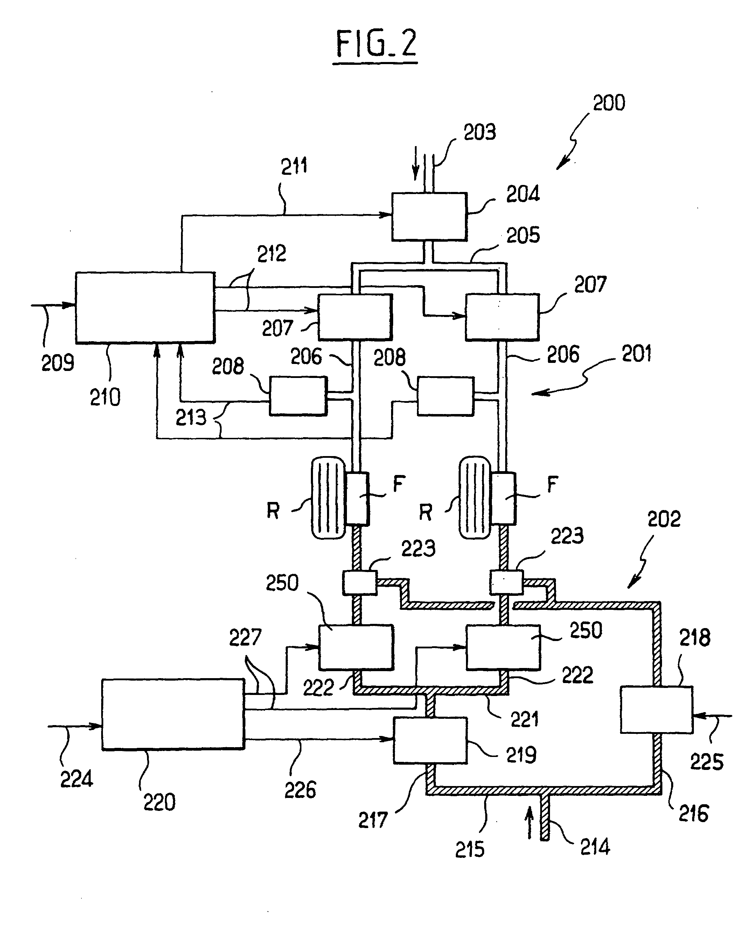

On va maintenant décrire, en se référant à la figure 2, un dispositif de freinage analogue à celui de la figure 1, avec l'unité de commande associée au circuit normal de ce dispositif de freinage. Le circuit 200 illustré sur la figure 2 comporte un circuit normal 201, et un circuit secours 202.

Pour le circuit normal 201, on trouve une canalisation d'alimentation 203, menant à une électrovanne 204, en aval de laquelle une branche commune 205 alimente deux canalisations 206 équipées d'une part d'une servovalve 207 et d'autre part d'un capteur de pression 208. Les ordres électriques de freinage commandés par le pilote, symbolisés par la ligne 209, arrivent à une unité électronique de commande du circuit normal 210. Les ordres de commande adressés à l'électrovanne 204 d'une part et aux servovalves 207 d'autre part, sont respectivement symbolisés par les lignes 211 et 212. L'unité électronique de commande 210 reçoit par ailleurs les signaux électriques provenant des deux capteurs de pression 208, comme schématisé par les lignes 213.

Pour le circuit secours 202, on retrouve, comme à la figure 4, une unité électronique de commande du circuit secours 220, recevant des ordres électriques de freinage commandés par le pilote, comme schématisé par la ligne 224, et délivrant les ordres de pression à chacune des deux valves à entraînement direct 250 du circuit secours.

Le circuit secours 202 comporte une entrée d'alimentation 214 menant à une branche commune 215 qui alimente deux branches 216 et 217. La branche 217 inclut une électrovanne 219 qui reçoit des signaux électriques de commande de l'unité de commande électronique 220, comme schématisé par la ligne 226. En aval de l'électrovanne 219, on trouve une branche commune 221 desservant deux branches 222 équipées chacune d'une valve à entraînement direct 250, puis, en aval de celle-ci, d'un clapet navette 223. Les valves à entraînement direct 250 reçoivent un ordre électrique de l'unité de commande 220, comme schématisé par les lignes 227.

La présence des unités électroniques de commande 210 (pour le circuit normal) et 220 (pour le circuit secours) montrent là encore que l'on utilise ainsi un freinage électrique.

Ceci est encore plus vrai dans la mesure où, comme cela est illustré sur la figure 2, on peut intégrer aussi un circuit de freinage parc au circuit secours 202, la commande du freinage parc se manifestant sous la forme d'ordres électriques de freinage commandés par le pilote. On distingue ainsi, en aval de la branche commune 215 précitée du circuit 202, une deuxième branche latérale 216 menant à un distributeur de freinage parc 218, en aval duquel la canalisation se dédouble pour se raccorder aux clapets navettes précités 223. Le distributeur 218 reçoit un ordre électrique de freinage parc commandé par le pilote, comme schématisé par la ligne 225. Grâce aux deux clapets navettes 223, il est facile d'obtenir le mode de freinage désiré, qu'il s'agisse d'un freinage parc en situation normale, ou d'un freinage secours en cas de panne.

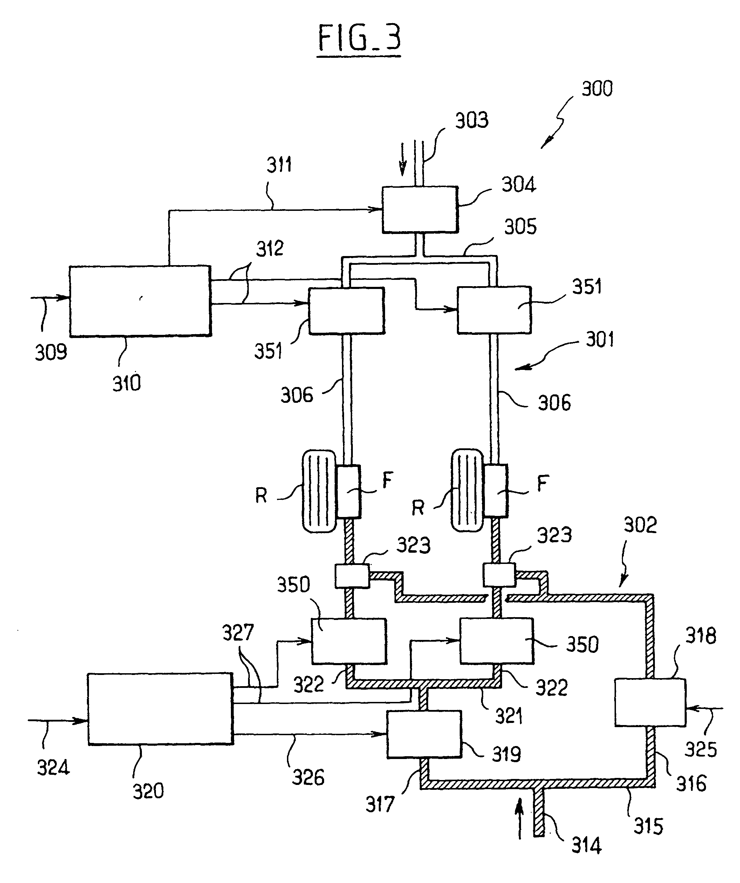

La figure 3 illustre une autre variante du dispositif de freinage de l'invention, qui est assez proche de celle qui vient d'être décrite en référence à la figure 2. La principale différence par rapport au circuit 200 précédemment décrit réside dans le remplacement, dans le circuit normal, des servovalves 207 de type traditionnel par des valves de freinage à entraînement direct 351 analogues aux valves notées 350 déjà prévues pour le circuit secours 302. Ainsi, le circuit 300 de la figure 3 comporte un circuit normal 301 également équipé de valves à entraînement direct 351. Les autres organes illustrés en figure 3 correspondent exactement à ceux du circuit 200 illustré en figure 2, et l'on a repris les mêmes références augmentées de 100 pour les composants homologues, lesquels ne seront donc pas à nouveau décrits.

Sur la figure 3, les valves de freinage du circuit normal 301 et du circuit secours 302 sont donc toutes constituées par des valves à entraînement direct, respectivement 351 et 350. On obtient ainsi un freinage électrique profitant pleinement du remplacement des servovalves traditionnelles à deux étages hydrauliques par des valves à entraînement direct telles que précédemment décrites.

Bien que cela ne soit pas illustré, on pourrait prévoir une autre variante dans laquelle le circuit normal serait seul équipé de valves à entraînement direct, tandis que le circuit secours serait réalisé de façon traditionnelle. Néanmoins, on profiterait alors beaucoup moins des avantages précités conférés par l'utilisation des valves à entraînement direct.

Pour chacune des valves à entraînement direct 150, 250, 350 et 351, précédemment mentionnées, il sera avantageux de prévoir un asservissement en pression interne à la valve à entraînement direct, comme cela a été déjà décrit plus en détail pour la valve à entraînement direct 50 en référence à la figure 5.

On pourra de même prévoir pour chacune de ces valves à entraînement direct, une deuxième boucle d'asservissement pour avoir un contrôle supplémentaire, comme illustré sur la figure 5 : on réalise en effet un asservissement interne en position, grâce à un capteur de position 35 associé au moteur électrique d'actionnement 31, qui envoie un signal électrique correspondant à l'électronique de commande associée 37, comme schématisé par la ligne 36, cette boucle supplémentaire d'asservissement étant représentée en traits mixtes pour mieux faire apparaître son caractère optionnel. En variante, on pourrait prévoir que cette deuxième boucle d'asservissement en position ne provienne pas du moteur électrique 31, mais du distributeur 30, pour envoyer un signal électrique correspondant vers l'électronique de commande 37. Le moyen de contrôle supplémentaire obtenu grâce à cette deuxième boucle d'asservissement améliore encore la précision et la réponse dynamique.

On est ainsi parvenu à réaliser un dispositif de freinage, à mode de commande électrique, qui, grâce à la présence, sur au moins une partie de son circuit hydraulique, de valves à entraînement direct, procure un grand nombre d'avantages techniques qui seront simplement rappelés ci-après pour montrer la supériorité d'une telle utilisation par rapport à l'utilisation traditionnelle de servovalves dans les circuits hydrauliques de freinage d'aéronefs.

On obtient maintenant une meilleure précision et une absence de dérive dans le temps. On obtient également une faible sensibilité aux fluctuations de température et de pression d'alimentation. On évite enfin la nécessité d'effectuer des ajustements hydrauliques de la caractéristique statique de la valve, ce qui n'était bien entendu pas le cas avec les servovalves traditionnelles à double étage hydraulique.

En outre, les valves à entraînement direct n'ayant pas de premier étage hydraulique contrairement aux servovalves traditionnelles (par exemple du type à potentiomètre hydraulique quadruple), la puissance pour commander le distributeur de la valve est électrique (c'est la commande du moteur) et non plus hydraulique (fuite du premier étage). La très faible fuite de la valve à entraînement direct, circonscrite au distributeur de celle-ci, facilite considérablement le choix d'un mode de freinage électrique sur un circuit d'alimentation limité en volume (par exemple constitué par un accumulateur hydraulique).

L'invention n'est pas limitée aux modes d'utilisation qui viennent d'être décrits, mais englobe toute variante revendiquée.

## Revendications

1. Dispositif de freinage d'un train de roues d'aéronef, dont chaque roue est équipée d'un frein actionné à partir de pédales de freinage, ledit dispositif de freinage comportant deux sources de pression alimentant chacune un circuit hydraulique, dont un circuit normal et un circuit secours intervenant en cas de panne, ces deux circuits hydrauliques menant à chacun des différents freins via une valve de freinage associée, **caractérisé en ce que** les valves de freinage du circuit normal (101 ; 201 ; 301) et/ou du circuit secours (102 ; 202 ; 302) sont constituées par des valves à entraînement direct (150 ; 250 ; 350, 351) commandées électriquement par une unité électronique de commande associée (120 ; 220 ; 320, 310).

2. Dispositif selon la revendication 1, **caractérisé en ce que** les valves de freinage du circuit secours (102 ; 202) sont seules constituées par des valves à entraînement direct (150 ; 250), les valves de freinage du circuit normal (101 ; 201) étant quant à elles des servo-valves (109 ; 207) de type traditionnel.

3. Dispositif selon la revendication 2, **caractérisé en ce que** les valves de freinage à entraînement direct (150) sont chacune associées aux freins (F) d'une paire de roues (R).

4. Dispositif selon la revendication 1, **caractérisé en ce que** les valves de freinage du circuit normal (101 ; 201 ; 301) et du circuit secours (102 ; 202 ; 302) sont toutes constituées par des valves à entraînement direct (150 ; 250 ; 350, 351).

5. Dispositif selon l'une des revendications 1 à 4, **caractérisé en ce que** certaines au moins des valves à entraînement direct (150 ; 250 ; 350, 351) sont asservies en pression.

6. Dispositif selon la revendication 5, **caractérisé en ce que** chaque valve à entraînement direct (50) asservie en pression inclut un distributeur hydraulique (30) et un moteur électrique d'actionnement (31) commandé par une électronique de commande associée (37), et, sur la sortie d'utilisation (14) du distributeur hydraulique (30), un capteur de pression (33) qui envoie à ladite électronique de commande (37) un signal électrique représentatif de la pression mesurée.

7. Dispositif selon la revendication 6, **caractérisé en ce que** la valve à entraînement direct (50) asservie en pression est également asservie en position grâce à un capteur de position (35) associé au moteur électrique d'actionnement (31), qui envoie un signal électrique correspondant à l'électronique de commande associée (37).

8. Dispositif selon l'une des revendications 1 à 7, **caractérisé en ce qu'**un circuit de freinage parc est combiné au circuit secours (202 ; 302) avec une alimentation commune, ledit circuit de freinage parc menant à chacun des freins (F) de roues (R) par un clapet navette associé (223 ; 323) disposé en aval de la valve à entraînement direct (250 ; 350) correspondante.

## Patentansprüche

1. Bremsvorrichtung für ein Fahrwerk eines Flugzeugs, dessen Räder jeweils mit einer Bremse ausgerüstet sind, die durch ein Bremspedal betätigt wird, wobei die Bremsvorrichtung zwei Druckquellen hat, die jeweils einen Hydraulikkreis speisen, darunter einen Normalkreis und einen bei einem Ausfall eingreifenden Hilfskreis, wobei diese beiden Hydraulikkreise über ein dazugehöriges Bremsventil zu jeder der verschiedenen Bremsen führen, **dadurch gekennzeichnet, dass** die Bremsventile des Normalkreises (101; 201; 301) und/oder des Hilfskreises (102; 202; 302) aus Ventilen (150; 250; 350, 351) mit Direktantrieb gebildet sind, die mittels einer dazugehörigen elektronischen Steuereinheit (120; 220; 320, 310) elektrisch gesteuert werden.

2. Vorrichtung nach Anspruch 1, **dadurch gekennzeichnet, dass** die Bremsventile des Hilfskreises (102; 202) einzig aus Ventilen (150; 250) mit Direktantrieb gebildet sind, während die Bremsventile des Normalkreises (101; 201) ihrerseits Servoventile (109; 207) herkömmlicher Art sind.

3. Vorrichtung nach Anspruch 2, **dadurch gekennzeichnet, dass** die Bremsventile (150) mit Direktantrieb jeweils mit den Bremsen (F) eines Paares von Rädern (R) verbunden sind.

4. Vorrichtung nach Anspruch 1, **dadurch gekennzeichnet, dass** die Bremsventile des Normalkreises (101; 201; 301) und des Hilfskreises (102; 202; 302) alle aus Ventilen (150; 250; 350, 351) mit Direktantrieb gebildet sind.

5. Vorrichtung nach einem der Ansprüche 1 bis 4, **dadurch gekennzeichnet, dass** wenigstens einige der Ventile (150; 250; 350, 351) mit Direktantrieb druckgeregelt werden.

6. Vorrichtung nach Anspruch 5, **dadurch gekennzeichnet, dass** jedes druckgeregelte Ventil (50) mit Direktantrieb einen hydraulischen Verteiler (30) und einen elektrischen Betätigungsmotor (31) einschließt, der von einer dazugehörigen Steuerelektronik (37) gesteuert wird, sowie am Nutzausgang (14) des hydraulischen Verteilers (30) einen Drucksensor (33), der an die genannte Steuerelektronik (37) ein elektrisches Signal sendet, das repräsentativ für den gemessenen Druck ist.

7. Vorrichtung nach Anspruch 6, **dadurch gekennzeichnet, dass** das druckgeregelte Ventil (50) mit Direktantrieb ferner durch einen mit dem elektrischen Betätigungsmotor (31) verbundenen Positionssensor (35) positionsgeregelt wird, wobei der Positionssensor an die dazugehörige Steuerelektronik (37) ein entsprechendes elektrisches Signal sendet.

8. Vorrichtung nach einem der Ansprüche 1 bis 7, **dadurch gekennzeichnet, dass** ein Parkbremskreis mit dem Hilfskreis (202; 302) mit einer gemeinsamen Speisung kombiniert ist, wobei der Parkbremskreis über ein dazugehöriges Wechselventil (223; 323), das stromabwärts des entsprechenden Ventils (250; 350) mit Direktantrieb angeordnet ist, zu jeder der Bremsen (F) der Räder (R) führt.

## Claims

1. Braking apparatus for braking a set of aircraft wheels, in which each wheel is fitted with a brake actuated from brake pedals, said braking apparatus comprising two pressure sources each feeding a respective hydraulic circuit, comprising a normal circuit and an emergency circuit for use in the event of a breakdown, the two hydraulic circuits leading to each of the various brakes via associated brake valves, the apparatus being **characterized in that** the brake valves of the normal circuit (101; 201; 301) and/or of the emergency circuit (102; 202; 302) are constituted by direct drive valves (150; 250; 350; 351) that are electrically controlled by associated electronic control units (120; 220; 320; 310).

2. Apparatus according to claim 1, **characterized in that** the brake valves of the emergency circuit (102; 202) are the only valves constituted by direct drive valves (150; 250), with the brake valves of the normal circuit (101; 201) being servo-valves (109; 207) of traditional type.

3. Apparatus according to claim 2, **characterized in that** each of the direct drive brake valves (150) is associated with the brakes (F) of a pair of wheels (R).

4. Apparatus according to claim 1, **characterized in that** the brake valves of the normal circuit (101; 201; 301) and of the emergency circuit (102; 202; 302) are all constituted by direct drive valves (150; 250; 350; 351).

5. Apparatus according to any one of claims 1 to 4, **characterized in that** at least some of the direct drive valves (150; 250; 350; 351) are servo-controlled in pressure.

6. Apparatus according to claim 5, **characterized in that** each pressure servo-controlled direct drive valve (50) includes a hydraulic distributor valve (30) and an actuating electric motor (31) controlled by associated control electronics (37), and on the delivery outlet (14) of the hydraulic distributor valve (30), a pressure sensor (33) which provides said control electronics (37) with an electrical signal representative of the measured pressure.

7. Apparatus according to claim 6, **characterized in that** the pressure servo-controlled direct drive valve (50) is also positioned servo-controlled by means of a position sensor (35) associated with the actuator electric motor (31), which sensor delivers a corresponding electrical signal to the associated control electronics (37).

8. Apparatus according to any one of claims 1 to 7, **characterized in that** a parking brake circuit is combined with the emergency circuit (202; 302) using a common feed, said parking brake circuit leading to each of the wheel brakes (F) via an associated shuttle check valve (223; 323) disposed downstream from the corresponding direct drive valve (250; 350).
